(19) Europäisches Patentamt

European Patent Office

Office européen des brevets

(11) Veröffentlichungsnummer: **0 482 335 B1**

(12) **EUROPÄISCHE PATENTSCHRIFT**

(45) Veröffentlichungstag der Patentschrift: **07.09.94**

(21) Anmeldenummer: **91115413.6**

(22) Anmeldetag: **12.09.91**

(51) Int. Cl.⁵: **C22B 7/02**, C22B 3/00

(54) Verfahren zur Behandlung von Flugstäuben.

(30) Priorität: **22.10.90 CH 3359/90**

(43) Veröffentlichungstag der Anmeldung:
**29.04.92 Patentblatt 92/18**

(45) Bekanntmachung des Hinweises auf die
Patenterteilung:
**07.09.94 Patentblatt 94/36**

(84) Benannte Vertragsstaaten:
**AT BE CH DE DK ES FR GB GR IT LI LU NL SE**

(56) Entgegenhaltungen:
**EP-A- 0 244 910**
**EP-A- 0 304 412**
**EP-A- 0 324 454**
**EP-A- 0 362 125**
**DE-C- 3 320 466**

**PATENT ABSTRACTS OF JAPAN vol. 6, no.
180 (C-125)14. September 1982 & JP-A-57 094
383 ( BABCOCK HITACHI K. K. ) 11. Juni 1982**

(73) Patentinhaber: **VON ROLL AG**

**CH-4563 Gerlafingen (CH)**

(72) Erfinder: **Frey, Rudolf**
**Rietstrasse 22**
**CH-8307 Effretikon (CH)**

(74) Vertreter: **Patentanwälte Schaad, Balass &
Partner**
**Dufourstrasse 101**
**Postfach**
**CH-8034 Zürich (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft ein Verfahren zur Entfernung von Schwermetallen aus Flugstäuben gemäss dem Oberbegriff von Anspruch 1.

Flugstäube fallen bei Heiz- und Verbrennungsanlagen an und werden mit Gewebe- oder Elektrofiltern aus den Rauchgasen entfernt. Diese Flugstäube enthalten, insbesondere bei Abfallverbrennungsanlagen, Schwermetalle. Das Vorhandensein löslicher Schwermetallsalze verbietet die direkte Deponierung der Flugstäube.

Es wurde bereits in der DE-B 33 20 466, vorgeschlagen die Schwermetalle aus Flugstäuben durch Behandlung mit der in der Rauchgaswäsche anfallenden sauren wässrigen Lösung zu entfernen und die löslichen Schwermetalle aus der sauren Lösung auszufällen. Der nach der sauren Extraktion verbleibende Rückstand enthält noch immer lösliche Metallverbindungen, weshalb er nicht direkte deponiert werden kann, sondern vorher in eine Matrix z.B. Zement oder durch Rückführung in den Verbrennungsraum in die Schlacke eingebunden werden muss.

Das Einbinden in eine Matrix vermag aus verschiedenen Gründen nicht zu befriedigen. Zement wird, je nach Umgebungsbedingungen, nach kürzerer oder längerer Zeit hydrolysiert, wobei die Metallsalze freigesetzt werden. Bei der Rückführung des Filterrückstandes in den Ofen wird Wasser mitgeführt, was sich ungünstig auf die Energiebilanz auswirkt.

Aufgabe der vorliegenden Erfindung ist es, ein Verfahren zur Behandlung von Flugstäuben vorzuschlagen, bei dem die obengenannten Nachteile vermieden werden. Insbesondere soll durch das erfindungsgemässe Verfahren die direkte Deponierung des Behandlungsproduktes ermöglicht werden

Die gestellte Aufgabe wird durch die Merkmale des kennzeichnenden Teils von Anspruch 1 gelöst. Bevorzugte Ausführungsformen der Erfindung bilden den Gegenstand der Ansprüche 2 bis 9.

Durch das erfindungsgemässe Verfahren werden die löslichen Schwermetallsalze, die nach der sauren Wäsche oder Extraktion noch nicht entfernt worden sind, in eine unlösliche Form übergeführt.

Nach der Behandlung mit dem Fällungsmittel wird der Filterrückstand, der praktisch keine löslichen Schwermetalle mehr enthält und direkt deponierbar ist, zur Entfernung des Fällungsmittels mit etwas Wasser gewaschen.

Das Filtrat und die Flüssigkeiten aus der Behandlung des Filterrückstandes können zusammengeführt werden. Aus dieser Gesamtflüssigkeit werden die Schwermetalle ausgefällt. Der angefallene Schlamm wird aufkonzentriert und der Metallrückgewinnung zugeführt. Die Zusammenführung dieser Flüssigkeiten erlaubt die Verwendung des Fällungsmittels bei der Behandlung des Filterrückstandes im Uberschuss, da nicht verbrauchtes Fällungsmittel bei der Fällung der Schwermetalle automatisch verbraucht wird.

Nach einer anderen Ausführungsform des erfindungsgemässen Verfahrens kann das Waschwasser des Filterrückstandes dem Rauchgaswäscher zugeführt werden.

Die Wahl des Fällungsmittels für die Behandlung des Filterrückstandes richtet sich nach der Art des verbrannten Materials und nach wirtschaftlichen Uberlegungen. Beispiele für geeignete Fällungsmittel sind Alkali- oder Erdalkalihydroxyde z.B. Ca(OH)$_2$ und anorganische und organische Sulfide.

Es ist vorteilhaft, dem Gemisch aus Flugasche und saurem Waschwasser eine lösliche Erdalkaliverbindung, vorzugsweise eine Bariumverbindung, zuzusetzen. Dadurch werden in der Rauchgaswaschflüssigkeit im Uberschuss vorhandene Sulfate ausgefällt. Dies trägt einerseits zur Inertisierung der zu deponierenden Flugasche und anderseits zur Verminderung der Menge der bei der Fällung der Schwermetalle vorliegenden Salzbelastung und des anfallenden Schlammes bei. Letzteres führt zu einem wirtschaftlicheren Verfahren bei der nachfolgenden Rückgewinnung der Schwermetalle.

Die Entfernung von Ammoniak oder Ammoniumsalzen aus der Flugasche kann entweder vor der Durchführung der sauren Wäsche durch Erhitzen oder aus der neutralisierten Waschflüssigkeit, dem Filtrat, durch Strippen erfolgen.

Die Erfindung wird weiter anhand des nachfolgenden Ausführungsbeispiels veranschaulicht.

Beispiel

Beim Verbrennen von 1 t Müll entstehen im Durchschnitt folgende Stoffe:
ca. 300 kg Schlacke
25 kg Flugasche
112 kg saures Waschwasser aus der nassen Rauchgasreinigung, enthaltend 4,5 kg HCl und 3 kg Na$_2$SO$_4$.

Quecksilber wird zuerst aus dem sauren Waschwasser mittels eines Ionenaustauscherharzes entfernt. Die 25 kg Flugasche werden mit den 112 kg Waschwasser in einem mit einem Rührwerk versehenen Kessel während 30 Minuten bei einem pH-Wert von 3 behandelt. Dabei werden mobile und mobilisierbare Schwermetalle aufgelöst. Die erhaltene Suspension wird auf ein Vakuumbandfilter gegeben. Die auf dem Filter zurückbleibende, von den Schwermetallen befreite Flugasche (Inertrückstand) wird zuerst mit einer 0,5 - 2 g/ℓ TMT 15 und 0,5 - 2 g/ℓ $Ca(OH)_2$ enthaltenden Lösung und dann mit Wasser gewaschen. (TMT 15 ist eine 15 %ige Lösung von Trimercapto-S-triazin, $C_3H_3N_3S_3$). Dabei wird eine Gesamtmenge von 3 l Flüssigkeit pro 1 ℓ Flugasche verwendet. 1 kg Flugasche entspricht ca. 2 ℓ.

Aus den vereinigten Filtraten und Waschflüssigkeiten werden die Schwermetalle ausgefällt, indem 3'400 g $Ca(OH)_2$ (trocken) in Wasser zugegeben werden. Der entstehende Schlamm wird in einer Filterpresse entwässert. Der als Schwermetallkonzentrat bezeichnete Filterkuchen wird dann der Metallrückgewinnung zugeführt.

Die nachfolgende Tabelle I zeigt die Materialbilanz des Verfahrens. Die Gewichtsangaben geben die Menge Trockensubstanz an. Alle %-Angaben beziehen sich auf die mit der Flugasche und dem sauren Waschwasser aus der nassen Rauchgasreinigung eingebrachte Trockensubstanzmenge, die 100 % darstellt.

Tabelle I

| | in g (=100%) | Inertrückstand in g | Inertrückstand in % | Schwermetallkonzentrat in g | Schwermetallkonzentrat in % | Gesamtabwasser in g | Gesamtabwasser in % |
|---|---|---|---|---|---|---|---|
| Trockensubstanz | 30'500 | 16'200 | 53,1 | 1'700 | 5,6 | 16'000 | 41,3 |
| Cl | 6'300 | < 10 | < 0,15 | 17 | 0,26 | 15'973 | 99,6 |
| $SO_4$ | 2'800 | 2'500 | 89,3 | 50 | 1,8 | 250 | 8,9 |
| Zn | 1'070 | 380 | 35,5 | 690 | 64,5 | < 0,5 | < 0,05 |
| Pb | 356 | 286 | 80,3 | 70 | 19,7 | < 0,1 | < 0,03 |
| Cd | 14,4 | 1,6 | 11,1 | 12,8 | 88,9 | < 0,01 | < 0,05 |
| Hg | 1,42 | 0,09 | 6,3 | 0,03 | 2,1 | < 0,001 | < 0,07 |
| | | | | | | [1] | [2] |

1) Bei der Fällung der Schwermetalle werden 3'400 g $Ca(OH)_2$ (berechnet als Trockensubstanz) zugegeben.

2) 91,6 % des Quecksilbers werden durch die Hg-Vorabscheidung entfernt.

EP 0 482 335 B1

Bezogen auf den Ausgangsstoff Flugasche betragen die Extraktionsausbeuten somit:

| Trockensubstanz | 35 % |
|---|---|
| Cd | 89 % |
| Zn | 65 % |
| Pb | 20 % |

Die Zusammensetzung der als Inertrückstand bezeichneten, von Schwermetallen befreiten Flugasche wird in Tabelle II dargestellt.

Tabelle II

| Stoff | Gesamtgehalt g/kg | Gehalt gemäss [*] Eluattest TVA mg/l |
|---|---|---|
| Cl | 0,69 | |
| $SO_4$ | 173 | |
| Zn | 11,60 | 3,85 |
| Pb | 8,40 | 0,24 |
| Cd | 0,05 | 0,08 |
| Hg | 0,008 | < 0,001 |

[*] Der Eluattest TVA (Technische Verordnung Abfälle des Eidgenössischen Departementes des Inneren, Anhang 4) ist ein normiertes Verfahren zur Feststellung der direkten Deponierbarkeit. Die gemäss der Erfindung erhaltenen Werde liegen unterhalb der Grenzwerte der TVA, d.h. die erfindungsgemäss behandelte Flugasche ist direkt deponierbar.

Die Zusammensetzung des Filterkuchens, der durch Fällung der Schwermetalle aus dem Abwasser, d.h. Filtrat und Waschwasser gewonnen wurde, ist in Tabelle III zusammengestellt.

Tabelle III

| Stoff | Gehalt in g/kg |
|---|---|
| Cl | 4,9 |
| $SO_4$ | 27 |
| Zn | 290 |
| Pb | 44 |
| Cd | 6 |
| Hg | < 0,01 |

Dieser Filterkuchen wird der Metallrückgewinnung zugeführt.

**Patentansprüche**

1. Verfahren zur Entfernung von Schwermetallen aus der Flugasche aus einer Verbrennungsanlage, insbesondere aus einer Verbrennungsanlage für Abfall, durch Behandlung der anfallenden Flugasche mit einer sauren wässrigen Lösung und Trennung der Flüssigkeit vom zurückbleibenden Feststoff durch Fest-Flüssig-Trennung, dadurch gekennzeichnet, dass man die Fest-Flüssig-Trennung durch Filtration vornimmt und dass man den Filterrückstand mit einer wässrigen Lösung eines Fällungsmittels für Schwermetalle behandelt und danach mit Wasser oder einer wässrigen Lösung wäscht.

2. Verfahren nach Anspruch 1, dadurch gekennzeichnet, dass man als saure wässrige Lösung die Waschflüssigkeit aus dem Rauchgaswäscher der Verbrennungsanlage verwendet.

4

EP 0 482 335 B1

3. Verfahren nach einem der vorangehenden Ansprüche, dadurch gekennzeichnet, dass man als Fällungsmittel ein Alkali- oder Erdalkalihydroxid, vorzugsweise Calciumhydroxyd, verwendet.

4. Verfahren nach einem der vorangehenden Ansprüche, dadurch gekennzeichnet, dass man als Fällungsmittel ein Sulfid verwendet.

5. Verfahren nach einem der vorangehenden Ansprüche, dadurch gekennzeichnet, dass man als Fällungsmittel ein organisches Sulfid verwendet.

6. Verfahren nach Anspruch 1, dadurch gekennzeichnet, dass man das Waschwasser dem Rauchgaswäscher zuführt.

7. Verfahren nach Anspruch 1, dadurch gekennzeichnet, dass man das Waschwasser der Mutterlauge des Filtrationsvorganges zugibt.

8. Verfahren nach einem der vorangehenden Ansprüche, dadurch gekennzeichnet, dass man während der Behandlung mit der sauren wässrigen Lösung lösliche Erdalkalimetallverbindungen, vorzugsweise lösliche Bariumverbindungen, zugibt.

9. Verfahren nach einem der vorangehenden Ansprüche, dadurch gekennzeichnet, dass man Filtrat und Behandlungsflüssigkeiten zusammenbringt und die Gesamtflüssigkeit mit einem Fällungsmittel für Schwermetalle behandelt.

**Claims**

1. Process for the removal of heavy metals from the fly ash of a combustion plant, in particular from a waste combustion plant, by treating the resulting fly ash with an acidic aqueous solution and separating the liquid from the remaining solid by solid-liquid separation, characterized in that the solid-liquid separation is performed by filtration and in that the filter residue is treated with an aqueous solution of a precipitant for heavy metals and then washed with water or an aqueous solution.

2. Process according to Claim 1, characterized in that the acidic aqueous solution used is the scrubbing liquid from the flue gas scrubber of the combustion plant.

3. Process according to one of the preceding claims, characterized in that the precipitant used is an alkali metal hydroxide or alkaline earth metal hydroxide, preferably calcium hydroxide.

4. Process according to one of the preceding claims, characterized in that the precipitant used is a sulphide.

5. Process according to one of the preceding claims, characterized in that the precipitant used is an organic sulphide.

6. Process according to Claim 1, characterized in that the wash water is fed to the flue gas scrubber.

7. Process according to Claim 1, characterized in that the wash water is added to the mother liquor of the filtration operation.

8. Process according to one of the preceding claims, characterized in that, during the treatment with the acidic aqueous solution, soluble alkaline earth metal compounds, preferably soluble barium compounds, are added.

9. Process according to one of the preceding claims, characterized in that filtrate and treatment liquids are united and the total liquid is treated with a precipitant for heavy metals.

5

**Revendications**

1. Procédé pour l'élimination de métaux lourds des cendres volantes d'une installation d'incinération, en particulier d'une installation d'incinération de déchets, par traitement des cendres volantes produites au moyen d'une solution aqueuse acide et separation du liquide des solides résiduels, par séparation solide-liquide, caractérisé en ce que la séparation solide-liquide est réalisée par filtration et que le résidu de filtration est traité avec une solution aqueuse d'un précipitant pour métaux lourds, avec lavage ultérieur au moyen d'eau ou d'une solution aqueuse.

2. Procédé selon la revendication 1, caractérisé en ce qu'on utilise, comme solution aqueuse acide, le liquide de lavage provenant du laveur de gaz de fumée de l'installation d'incinération.

3. Procédé selon une des revendications qui précèdent, caractérisé en ce qu'on utilise comme précipitant un hydroxyde alcalin ou alcalino-terreux, préférentiellement de l'hydroxyde de calcium.

4. Procédé selon une des revendications qui précèdent, caractérisé en ce qu'on utilise un sulfure comme précipitant.

5. Procédé selon une des revendications qui précèdent, caractérisé en ce qu'on utilise un sulfure organique comme précipitant.

6. Procédé selon la revendication 1, caractérisé en ce qu'on conduit l'eau de lavage au laveur de gaz de fumée.

7. Procédé selon la revendication 1, caractérisé en ce qu'on ajoute l'eau de lavage de la lessive-mère du processus de filtration.

8. Procédé selon une des revendications qui précèdent, caractérisé en ce qu'on ajoute, pendant le traitement avec la solution aqueuse acide, des composés métalliques alcalino-terreux solubles, et préférentiellement des composés de baryum solubles.

9. Procédé selon une des revendications qui précèdent, caractérisé en ce qu'on réunit le filtrat et les liquides de traitement et en ce qu'on traite le liquide ainsi obtenu avec un précipitant pour métaux lourds.